(19) Europäisches Patentamt
European Patent Office
Office européen des brevets

(11) **EP 3 270 538 B1**

(12) **FASCICULE DE BREVET EUROPEEN**

(45) Date de publication et mention de la délivrance du brevet:
**26.09.2018 Bulletin 2018/39**

(51) Int Cl.:
***H04L 9/32*** *(2006.01)*

(21) Numéro de dépôt: **17169099.3**

(22) Date de dépôt: **02.05.2017**

(54) **PROCÉDÉ ET SYSTÈME D'AUTHENTIFICATION PAR CIRCUITS CONFUS**

AUTHENTIFIZIERUNGSVERFAHREN UND -SYSTEM MITHILFE VON KONFUSEN SCHALTKREISEN

AUTHENTICATION METHOD AND SYSTEM USING CONFUSED CIRCUITS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2016 FR 1656776**

(43) Date de publication de la demande:
**17.01.2018 Bulletin 2018/03**

(73) Titulaire: **Safran Identity & Security**
**92130 Issy-les-Moulineaux (FR)**

(72) Inventeurs:
• **CHABANNE, Hervé**
**92130 Issy Les Moulineaux (FR)**
• **MOREL, Constance**
**92130 Issy Les Moulineaux (FR)**

(74) Mandataire: **Regimbeau**
**20, rue de Chazelles**
**75847 Paris Cedex 17 (FR)**

(56) Documents cités:
• CHABANNE HERVE ET AL: "Partially Re-Usable Garbled Circuits for Iris Recognition", 2016 INTERNATIONAL CONFERENCE OF THE BIOMETRICS SPECIAL INTEREST GROUP (BIOSIG), GESELLSCHAFT FUER INFORMATIK, 21 septembre 2016 (2016-09-21), pages 1-5, XP032995318, DOI: 10.1109/BIOSIG.2016.7736931
• SHAFI GOLDWASSER ET AL: "Reusable Garbled Circuits and Succinct Functional Encryption", INTERNATIONAL ASSOCIATION FOR CRYPTOLOGIC RESEARCH,, vol. 20130513:023625, 13 mai 2013 (2013-05-13), pages 1-52, XP061007206, DOI: 10.1145/2488608.2488678
• YING LUO ET AL: "An efficient protocol for private iris-code matching by means of garbled circuits", IMAGE PROCESSING (ICIP), 2012 19TH IEEE INTERNATIONAL CONFERENCE ON, IEEE, 30 septembre 2012 (2012-09-30), pages 2653-2656, XP032333743, DOI: 10.1109/ICIP.2012.6467444 ISBN: 978-1-4673-2534-9
• BENNY APPLEBAUM ET AL: "Encoding Functions with Constant Online Rate or How to Compress Garbled Circuits Keys", INTERNATIONAL ASSOCIATION FOR CRYPTOLOGIC RESEARCH,, vol. 20150215:073926, 15 février 2015 (2015-02-15), pages 1-38, XP061017382, DOI: 10.1137/130929643
• CRAIG GENTRY ET AL: "How to Compress (Reusable) Garbled Circuits", INTERNATIONAL ASSOCIATION FOR CRYPTOLOGIC RESEARCH,, vol. 20131210:024928, 10 décembre 2013 (2013-12-10), pages 1-32, XP061015204,
• JULIEN BRINGER ET AL: "Boosting GSHADE Capabilities", SYMPOSIUM ON ACCESS CONTROL MODELS AND TECHNOLOGIES, ACM, 2 PENN PLAZA, SUITE 701 NEW YORK NY 10121-0701 USA, 6 juin 2016 (2016-06-06), pages 203-214, XP058260347, DOI: 10.1145/2914642.2914658 ISBN: 978-1-4503-3802-8

**Description**

DOMAINE TECHNIQUE GENERAL

La présente invention concerne de manière générale l'authentification sécurisée d'individus, l'authentification étant réalisée par comparaison d'une donnée d'un individu que l'on souhaite identifier à une donnée de même nature d'individus répertoriés, cette donnée étant stockée dans une base.

L'invention s'applique notamment à l'authentification biométrique d'un individu, dans laquelle les données comparées de l'individu et de la base de données sont des informations biométriques relatives par exemple à l'iris, ou la forme du visage du porteur.

ETAT DE L'ART

Dans le domaine de l'authentification et de la biométrie par exemple, il est courant de comparer deux données : une donnée d'enrôlement, préalablement enrôlée, et une donnée de test, qui est une image obtenue auprès de la personne qui souhaite s'authentifier. L'individu est authentifié quand la donnée d'enrôlement correspond à la donnée de test avec un niveau de similarité suffisamment important. On parlera dans la suite de correspondance entre les données.

Les données biométriques étant des données sensibles, il faut ne pas les révéler pendant l'authentification. Pour cela, il est possible d'effectuer l'authentification à l'aide d'un calcul sécurisé multipartite, (connu sous l'acronyme anglais SMC pour *Secure Multi-Party Computation,* voir référence [SMC] en fin de description), qui consiste à réaliser un calcul entre plusieurs participants détenant chacun une ou plusieurs entrées d'une fonction à calculer, de sorte que les participants apprennent à l'issue du calcul uniquement le résultat du calcul, et n'obtiennent aucune information sur les entrées détenues par les autres participants.

Parmi les protocoles de SMC, le protocole de Yao (voir référence [YAO] et référence [SAD] qui met en oeuvre un tel protocole et référence [SNY] qui le présente), qui met en oeuvre des circuits confus (appelés en anglais *garbled circuits*), propose une méthode efficace. Cette méthode sera explicitée dans la description.

Malheureusement la mise en oeuvre d'une seule comparaison entre la donnée d'enrôlement et une unique donnée de test ne suffit pas toujours pour permettre l'authentification, car la donnée de test peut être acquise dans de mauvaises conditions et la comparaison peut échouer alors même que l'utilisateur qui cherche à s'authentifier correspond réellement à l'utilisateur enrôlé. Il est alors souvent nécessaire de redonner une chance ou plusieurs à l'utilisateur lors d'un rejet. La vidéo est de plus en plus utilisée pour résoudre ce problème.

La méthode consiste à prendre une courte vidéo au lieu de prendre uniquement une photo, de sélectionner les meilleurs images de la vidéo et ensuite de comparer une par une les images sélectionnées de la vidéo avec la donnée d'enrôlement jusqu'à obtenir une correspondance.

Malheureusement, les circuits confus ne sont pas réutilisables pour comparer successivement plusieurs données. En effet, dès lors qu'un même circuit est utilisé deux fois de suite, l'entité l'exécutant peut alors en déduire certains bits d'entrée de l'autre partie. La confidentialité des données n'est plus respectée.

Par conséquent, l'implémentation du protocole de Yao à partir d'une vidéo de test à la place d'une unique image de test implique l'utilisation d'un circuit confus pour chaque image de la vidéo, ce qui est trop coûteux en temps de calcul, y compris pour un serveur délocalisé.

Quelques articles scientifiques (voir référence [GE] et [GO]) présentent des circuits confus réutilisables mais les méthodes proposées ne sont pas encore suffisamment efficaces pour des cas pratiques. En effet, ces circuits réutilisables sont basés sur de la cryptographie asymétrique alors que les circuits confus classiques sont basés sur de la cryptographie symétrique.

Il est connu aussi de l'état de l'art les documents:

1) Reusable Garbled Circuits and Succinct Functional Encryption de Shafi Goldwasser; Yael Kalai; Raluca Ada Popa; Vinod Vaikuntanathan; Nickolai Zeldovich et publié 13-05-2013 qui décrit des cuircuits ré-utilisables.

2) An efficient protocol for private iris-code matching by means of garbled circuits de Ying Luo; Sen-ching Samson Cheung; Tommaso Pignata; Riccardo Lazzeretti; Mauro Barni de 30-09-2012 qui décrit l'utilisation de circuits pour de l'authentification iométrique.

3) Encoding Functions with Constant Online Rate or How to Compress Garbled Circuits Keys Benny Applebaum; Yuval Ishai; Eyal Kushilevitz; Brent Waters publié le 15-02-2015 qui décrit l'encodage de functions altéatoires et leur optimisation ainsi que leurs application à de protocols multi-parties.

4) How to Compress (Reusable) Garbled Circuits de Craig Gentry; Sergey Gorbunov; Shai Halevi; Vinod Vaikuntanathan; Dhinakaran Vinayagamurthy publié le 10-02-2013.

5) Boosting GSHADE Capabilities de Julien Bringer; Othmane El Omri; Constance Morel; Hervé Chabanne publié le 06-06-2016. Il existe donc un besoin pour authentifier un individu à partir d'une donnée biométrique de façon sécurisée, et de façon plus rapide et moins coûteuse en capacité de calcul que dans les solutions déjà proposées.

PRESENTATION DE L'INVENTION

Pour cela, l'invention propose un procédé d'authentification d'un utilisateur mis en oeuvre à l'aide d'un système comprenant :

- une première unité client comprenant une mémoire dans laquelle est stockée une donnée biométrique de référence,
- une deuxième unité client comprenant des moyens d'acquisition d'au moins une donnée biométrique de test, et
- un serveur, configuré pour générer des circuits confus d'évaluation de fonctions, chaque circuit confus ayant pour entrées un ensemble de clés de chiffrement de bits de données d'entrée de la fonction à évaluer et pour sortie les clés de chiffrement correspondant aux bits du résultat de la fonction évaluée, et dans lequel les étapes de calcul de la fonction sont décomposées sous forme d'opérations logiques élémentaires, chaque circuit confus comprenant en outre un ensemble de clés de codage de chacune des entrées et sorties possibles de chaque opération logique élémentaire,

le procédé comprenant la comparaison d'un nombre C de données de test acquises sur l'utilisateur par la deuxième unité client à la donnée de référence, ladite comparaison comprenant le calcul, au moyen de circuits confus, d'une distance entre la donnée de référence et chaque donnée de test,
caractérisé en ce que la comparaison comprend la mise en oeuvre des étapes suivantes :

- à partir d'un ensemble S comprenant des indices des données de tests, tels que la valeur du bit de chaque donnée de test associé à un indice de l'ensemble S est invariante sur toutes les C données de test, le serveur décompose la fonction à évaluer en :

  une sous-fonction $f_S$ qui comprend toutes les opérations logiques dont la sortie dépend uniquement de bits d'entrée dont l'indice appartient audit ensemble S et génère pour l'évaluation de cette sous-fonction $f_S$ un unique circuit confus dit invariant,
  une sous-fonction $f_{\overline{S}}$ qui comprend toutes les opérations logiques de la fonction f non-évaluée par la sous-fonction $f_S$ et génère, pour chacune des C données de test , un circuit confus dit variant pour l'évaluation de la sous-fonction $f_{\overline{S}}$,

- le serveur génère aléatoirement les clés de codage pour l'unique circuit confus invariant et pour les C circuits confus variants,
- le serveur envoie les circuits confus à l'une des unités clients,
- les deux unités clients récupèrent auprès du serveur par transfert inconscient:

  des clés de codages correspondant aux valeurs des bits des entrées de la fonction à évaluer en fonction des données de référence et des C données de test respectivement à leur disposition, la première unité client récupérant un ensemble de clés relatives à la donnée biométrique de référence et la deuxième unité client récupérant un ensemble de clés comprenant une clé pour chaque bit associé à un indice appartenant à l'ensemble S et C clés pour chaque bit associé à un indice n'appartenant pas à S, et

- l'unité client ayant reçu les circuits confus récupère les clés de codages auprès de l'autre unité client, et évalue la fonction pour chacune des C données tests, avec comme entrées les clés récupérées, en exécutant les circuits confus,
- en fonction desdites évaluations de f, authentification ou non de l'utilisateur ou de l'objet.

On profite ainsi de la redondance entre les C données biométriques de test pour limiter la puissance et le temps de calcul.
Le procédé peut comprendre les caractéristiques suivantes, prises seules ou en combinaison :

- l'ensemble d'indices est déterminé dans une étape préalable par la deuxième unité client par analyse des bits invariants entre les C données de test.

- l'ensemble d'indices comprend un nombre fixé d'indices, les indices étant choisis d'une façon quelconque, la deuxième unité client applique une permutation aux bits de chaque donnée invariants entre les C données de test pour que lesdites indices desdits bits invariants correspondent aux indices de l'ensemble d'indices, et les clé de codage sont récupérées pour les bits permutés.

- le nombre fixé d'indices de l'ensemble d'indices est déterminé au préalable par une analyse de base de données, le nombre fixé d'indices de l'ensemble d'indices étant choisi pour être inférieur au nombre réel de bit invariants entre les C données de test.

- les étapes de décomposition de la fonction à évaluer, de génération des clés de codage et d'envoi des circuits confus à l'une des unités de clients sont mises en oeuvre préalablement à l'acquisition des données tests ou à l'application de la permutation auxdites données.

- les deux unités client forment un seul terminal-client, ou en variante le serveur et l'une des deux unités client forment une unique entité, et dans lequel l'autre unité client reçoit les circuits confus,

- le serveur envoie aussi à l'unité client une table de concordance des sorties de chaque circuit confus, de sorte que l'unité client qui évalue la fonction f puisse connaitre la valeur des clés de sortie de l'évaluation.

- en variante, le procédé comprend une étape au cours de laquelle l'unité client ayant évalué la fonction envoie au serveur les clés de sortie de l'évaluation et le serveur en déduit, à partir de la table de concordance des sorties de chaque circuit confus, les évaluations de la fonction f.

- les données sont des codes binaires d'iris,

- la fonction à évaluer comprend le calcul de la distance de Hamming normalisée entre la donnée biométrique de référence et chacune des C données biométriques de test et comprend la comparaison de cette distance à un seuil.

- le circuit confus invariant est évalué une seule fois pour les C données de test.

L'invention propose aussi un système d'authentification d'individus, comprenant :

- une première unité client comprenant une mémoire,
- une deuxième unité client comprenant des moyens d'acquisition d'au moins une donnée de test, et
- un serveur, configuré pour générer des circuits confus d'évaluation de fonctions, chaque circuit confus ayant pour entrées un ensemble de clés de chiffrement de bits de données d'entrée de la fonction à évaluer et pour sortie les clés de chiffrement correspondant aux bits du résultat de la fonction évaluée, et dans lequel les étapes de calcul de la fonction sont décomposées sous forme d'opérations logiques élémentaires, chaque circuit confus comprenant en outre un ensemble de clé de codage de chacune des entrées et sorties possibles de chaque opération logique élémentaire,

le système étant caractérisé en ce qu'il est configuré pour mettre en oeuvre le procédé tel que décrit précédemment.
L'invention propose aussi un serveur, comprenant un calculateur adapté pour générer des circuits confus d'évaluation d'une fonction comprenant la comparaison d'une donnée de référence à une pluralité C de données de test, le serveur étant caractérisé en ce qu'il est adapté pour, à partir d'un ensemble S comprenant des indices de données de tests, tels que la valeur du bit de chaque donnée de test associé à un indice de l'ensemble S est invariant sur toutes les C données de test, décomposer la fonction à évaluer en :

une sous-fonction $f_S$ qui comprend toutes les opérations logiques dont la sortie dépend uniquement de bits d'entrée dont l'indice appartient audit ensemble S, et
une sous-fonction $f_{\overline{S}}$ qui comprend toutes les opérations logiques de la fonction f non-évaluée par la sous-fonction $f_S$,

et pour générer un unique circuit confus dit invariant pour l'évaluation de la sous-fonction $f_S$, et pour chacune des C données de test, un circuit confus dit variant pour l'évaluation de la sous-fonction $f_{\overline{S}}$.

L'invention propose aussi un produit programme d'ordinateur, comprenant des instructions de code pour la mise en oeuvre d'un procédé comprenant la génération de circuits confus d'évaluation d'une fonction comprenant la comparaison d'une donnée de référence à une pluralité C de données de test, ladite génération comprenant :

à partir d'un ensemble S comprenant des indices de données de tests, tels que la valeur du bit de chaque donnée de test associé à un indice de l'ensemble S est invariant sur toutes les C données de test, la décomposition de la fonction à évaluer en :

une sous-fonction $f_S$ qui comprend toutes les opérations logiques dont la sortie dépend uniquement de bits d'entrée dont l'indice appartient audit ensemble S, et

une sous-fonction $f_{\overline{S}}$ qui comprend toutes les opérations logiques de la fonction f non-évaluée par la sous-fonction $f_S$,

et la génération :

- d'un unique circuit confus dit invariant pour l'évaluation de la sous-fonction $f_S$, et,
- pour chacune des C données de test, d'un circuit confus dit variant pour l'évaluation de la sous-fonction $f_{\overline{S}}$,

quand il est exécuté par un calculateur.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- la figure 1 illustre un système pour l'authentification d'un utilisateur auprès d'une unité client,
- les figures 2a à 2e illustrent un exemple de réalisation d'un circuit confus,
- le figure 3 illustre une décomposition en opérations élémentaires d'une fonction à évaluer, où la fonction est par ailleurs une distance de Hamming normalisée suivie d'une comparaison du résultat de la distance de Hamming à un seuil,
- la figure 4 illustre un schéma simplifié d'une décomposition de la fonction en deux sous-fonctions, chacune associé à un circuit confus,
- les figures 5 et 6 détaillent deux variantes d'un procédé conforme à l'invention.

DESCRIPTION DETAILLEE

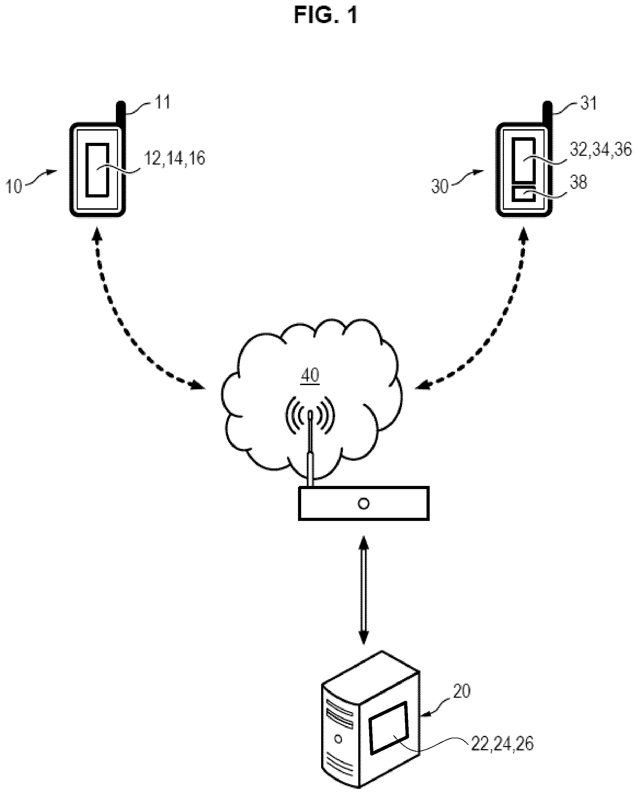

En référence à la **figure 1,** on a représenté un système permettant d'authentifier un utilisateur. Le système comprend une première unité client 10, un serveur 20 et une deuxième unité client 30.

La première unité client 10 et la deuxième unité client 30 peuvent être formées par un même terminal-client, tel qu'un smartphone.

Les unités clients 10, 30 et le serveur 20 peuvent communiquer entre eux soit directement, par exemple par signal radiofréquence, soit par le biais d'un réseau 40.

Les unités clients 10, 30 se présentent sous la forme d'un téléphonique mobile performant tel qu'un *smartphone,* ou bien une tablette numérique, ou encore d'un ordinateur.

Chaque unité client 10, 30 comprend une unité de calcul 12, 32 dotée notamment d'une mémoire 14, 34 et d'un calculateur 16, 36.

Chaque unité client 10,30 peut soit être utilisée par un utilisateur légitime, à qui il appartient, c'est-à-dire un utilisateur non frauduleux, ou bien par un utilisateur mal intentionné, c'est-à-dire un utilisateur frauduleux. Cet utilisateur frauduleux peut soit être une personne, soit être une entité numérique.

La mémoire 14, 34 peut être sous la forme d'une mémoire flash, ou bien d'une mémoire morte, type ROM, ou encore d'une mémoire vive RAM. La mémoire 14, 34 peut aussi être sous la forme d'un stockage dit externe, configuré pour être connecté physiquement à l'unité de calcul 12, 32, par exemple par un port USB.

Le calculateur 16, 36 est un microprocesseur, un processeur, ou un microcontrôleur apte à effectuer des calculs et en particulier à mettre en oeuvre des calculs cryptographiques. Le calculateur 16, 36 est notamment configuré pour exécuter des lignes de codes issues d'un programme d'ordinateur.

La première unité client 10 comprend dans sa mémoire au moins une donnée biométrique b relative à l'utilisateur qui peut être légitimement authentifié.

Avantageusement, la deuxième unité client 30 comprend des moyens d'acquisition de données biométriques 38, dites « test ». Ces moyens 38 permettent d'acquérir une donnée biométrique à partir d'un iris ou d'un visage par exemple. On peut citer par exemple un capteur d'image couplé à un module logiciel d'extraction d'une donnée biométrique.

Les moyens d'acquisition de données biométriques 38 peuvent être intégrés à l'unité client 30 ou externes, mais connectables à ce dernier. On connait pour cela des dispositifs d'acquisition reliés en filaire à un ordinateur.

Les moyens d'acquisition 38 sont adaptés pour acquérir une image brute d'un trait biométrique qui est ensuite traitée pour obtenir une donnée biométrique exploitable pour la mise en oeuvre d'une authentification. Par donnée biométrique, on entend donc une donnée directement exploitable dans un procédé d'authentification. Les procédés de traitement de l'image brute sont connus et ne seront pas détaillés ici.

Le serveur 20 comprend lui aussi une unité de calcul 22 dotée notamment d'une mémoire 24 et d'un calculateur 26. Le serveur 20 est typiquement un serveur de *cloud,* c'est-à-dire délocalisé.

La mémoire 24 peut être sous la forme d'une mémoire flash, ou bien d'une mémoire morte, type ROM, ou encore d'une mémoire vive RAM. La mémoire 14 peut aussi être sous la forme d'un stockage dit externe, configuré pour être connecté physiquement à l'unité de calcul 22, par exemple par un port USB.

Le calculateur 26 est un microprocesseur, un processeur, ou un microcontrôleur apte à effectuer des calculs et en particulier à générer des circuits confus et à générer des clés aléatoires pour chaque valeur de bit. Le calculateur 26 est notamment configuré pour exécuter des lignes de codes issues d'un programme d'ordinateur.

Les trois unités de traitement 12, 22, 32 comprennent avantageusement des interfaces de communication 11, 21, 31 à distance pour l'envoi et la réception de données, notamment par le réseau 40.

Le réseau 40 est soit un réseau internet, filaire (Ethernet) ou sans-fil (Wi-Fi), soit un réseau téléphonique GPRS, EDGE, 3G ou 4G ou autre, soit un réseau local, soit un réseau par signal radiofréquence. Les interfaces de communication 11, 21, 31 sont adaptées pour permettre la communication en fonction du réseau 40 concerné.

Les deux unités client 10, 30 peuvent faire partie de la même entité.

Le serveur 20 peut être la même entité qu'un des deux clients 10 ou 30.

Deux variantes E, F d'un procédé d'authentification vont être décrit. Ce procédé utilise les similitudes entre plusieurs images issues d'une vidéo pour éviter de calculer sur des données redondantes.

Dans le cadre de la présente invention, la première unité client 10 a en mémoire une donnée biométrique de base b. Pour la suite de la description, on prendra l'exemple d'une donnée de référence d'iris, obtenue à partir d'une image d'iris (le trait biométrique). La deuxième unité client 30 a quant à elle la possibilité d'acquérir une vidéo du trait biométrique - par exemple l'iris d'un utilisateur qui souhaite être authentifié. Par vidéo, on entend une succession d'images capturées à moins de dix centièmes de seconde l'une de l'autre. De cette vidéo est sélectionné et extrait un ensemble de C images, ou plus généralement C données biométriques dites données de test. Ces données appartenant toutes au même utilisateur, elles comprennent des similitudes et notamment un ensemble de bits en commun.

### Les circuits confus (*garbled circuit*) du protocole de Yao

#### *Transferts inconscients*

Le protocole de Yao met en oeuvre des transferts inconscients (connus en anglais sous le nom « *oblivious transfers* »), qui sont des opérations de calcul entre deux unités P1 et P2.

Dans ce type d'opération, P1 dispose d'une liste de N éléments indexés $X_i$, et P2 connaît le nombre N d'éléments de la liste et choisit un indice i entre 1 et N. Par transfert inconscient, P2 récupère le $i^{ème}$ élément de P1, c'est-à-dire l'élément de P1 indexé par i.

P1 n'apprend aucune information sur l'indice de l'élément récupéré par P2.

P2 ne récupère quant à lui aucune information sur les autres éléments de la liste détenus par P1.

La référence [Ra] présente le principe des transferts inconscients.

#### *Circuits confus*

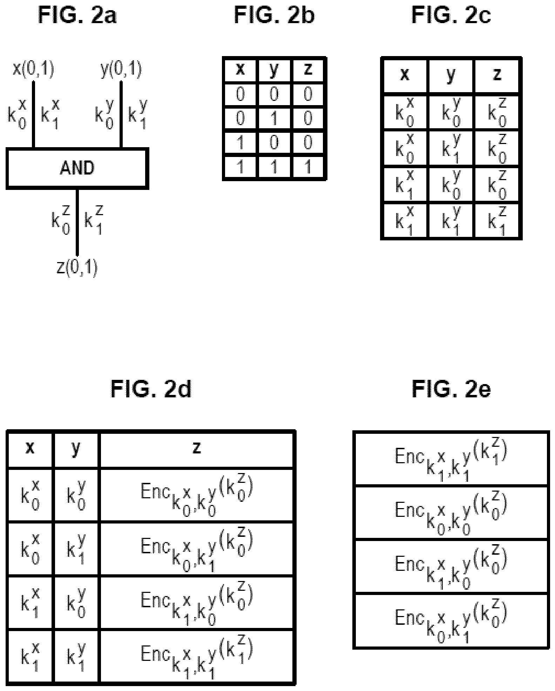

Le protocole de Yao met également en oeuvre des circuits confus (connus en anglais sous le nom « garbled circuits »). Les **figures 2a à 2e** illustrent un exemple de réalisation d'un tel circuit confus.

Un circuit confus, dont un schéma est représenté à titre d'exemple en **figure 2a,** est un circuit binaire crypté obtenu à partir d'un circuit booléen représentant une fonction f à évaluer, ce circuit étant décomposé en une succession de portes logiques élémentaires (AND ou XOR par exemple). Le schéma du circuit booléen illustré en **figure 2a** ne comprend que la fonction élémentaire « AND », qui comporte deux entrées x et y, chacune pouvant prendre la valeur binaire 0 ou 1, et une sortie z, pouvant également prendre la valeur binaire 0 ou 1.

De manière traditionnelle, à chaque porte logique est attribuée une table de vérité, ou de concordance, établissant le lien logique entre les sorties et les entrées. On a illustré à titre d'exemple en **figure 2b** la table de vérité de la fonction logique « AND ».

Pour assurer la sécurisation de l'évaluation de la fonction f, chaque entrée et chaque sortie possibles de chaque porte logique élémentaire sont chiffrées par le créateur du circuit confus (ici le serveur 20), au moyen de paires de clés de chiffrement aléatoires, correspondant aux deux valeurs booléennes possibles, propres à chaque entrée ou sortie. On a par exemple en **figure 2c** remplacé les valeurs binaires 0 et 1 que peut prendre x par des clés correspondantes $k_0^x$ et $k_1^x$, et de même pour les valeurs prises par y et z.

Ceci permet d'obtenir une table de concordance où les valeurs binaires d'entrées et de sorties sont remplacées par des clés de chiffrement.

Les sorties de chaque porte logique sont ensuite cryptées par les clés de chiffrement des valeurs des entrées correspondantes, pour obtenir une table de vérité cryptée ou confuse (« *garbled* ») en **figure 2d.**

Ainsi par exemple, dans le cas de la fonction AND, la clé de chiffrement $k_0^z$ correspondant à la valeur 0 de z apparaît dans tous les cas où x et y ne sont pas égaux à 1. En revanche, cette clé $k_0^z$ n'est pas cryptée de la même manière selon les valeurs prises par x et y : en effet, si x et y valent tous deux 0, la clé $k_0^z$ est cryptée au moyen des clés $k_0^x$ et $k_0^y$ : on note cette clé cryptée $Enc_{k_0^x, k_0^y}(k_0^z).$

Enfin, on retire les clés d'entrée de la table, et les clés obtenues pour chaque sortie sont réordonnées de façon aléatoire comme en **figure 2e,** la table de vérité cryptée et brouillée ainsi obtenue est ce que l'on appelle véritablement le circuit confus.

Pour pouvoir évaluer la fonction f du circuit à partir des clés de chiffrement, une table de concordance T entre les clés de chiffrement du résultat de la fonction qu'on évalue et les valeurs correspondantes des bits est générée par le créateur du circuit.

*Protocole de Yao*

Enfin, le protocole de Yao est une méthode de calcul sécurisé dans laquelle plusieurs parties souhaitent réaliser un calcul à partir de données dont elles disposent, sans communiquer entre elles la teneur de ces données.

Pour ce faire, l'une des parties (ici le serveur 20) crée un circuit confus d'évaluation d'une fonction f , comme décrit ci-dessus, ainsi que des paires de clés de chiffrement (une pour la valeur binaire 0 et une pour la valeur binaire 1) pour chacun des bits d'entrées et de sorties des portes logiques du circuit. Le créateur du circuit confus génère également une table de concordance T entre les clés de chiffrement du résultat de la fonction et le résultat lui-même.

Le créateur du circuit confus envoie ensuite à l'autre partie le circuit confus, et les clés de chiffrement des bits des données d'entrée appartenant au créateur. En d'autres termes, le serveur 20 envoie le circuit confus à uniquement une parmi les deux unités clients. Si le serveur 20 et l'unité client 10 (ou 30 respectivement) sont une même entité, le circuit confus est envoyé à l'unité client 30 (ou 10 respectivement)

Ainsi, pour chaque bit x d'entrée du créateur du circuit égal à 0 (respectivement 1), le créateur envoie uniquement la clé de chiffrement $k_0^x$ (respectivement $k_1^x$ ). Comme ces clés sont aléatoires, l'utilisateur du circuit confus ne peut obtenir aucune information sur les bits correspondant des données détenues par le créateur.

En outre, l'utilisateur du circuit confus récupère auprès du créateur, par transfert inconscient, les clés correspondant aux bits des données d'entrée de la fonction qu'ils possèdent.

Ainsi, pour chaque bit y d'entrée de l'utilisateur, le créateur prépare une liste à deux éléments composée de $k_0^y$ et $k_1^y$ et l'index choisi par l'utilisateur pour le transfert inconscient est la valeur du bit y.

Le recours à la méthode du transfert inconscient permet que le créateur n'obtienne aucune information sur les valeurs des bits des données de l'utilisateur du circuit.

Enfin, l'utilisateur du circuit confus peut évaluer la fonction à l'aide des clés qu'il a obtenues afin d'obtenir les clés de sortie correspondant au résultat de l'évaluation de la fonction f. Soit le créateur du circuit confus envoie la table de concordance T à l'utilisateur qui en déduit le résultat de la fonction. Soit l'utilisateur envoie au créateur du circuit confus la ou les clé(s) de sortie et le créateur du circuit confus en déduit le résultat de la fonction à l'aide de la table de concordance.

L'identification par codes binaires d'iris

La donnée biométrique d'iris comprend deux vecteurs IC = (I, M) de bits de longueur L, où L vaut généralement 2048. On parle ainsi de codes binaires d'iris (appelé *IrisCode,* voir référence [IRIS]). Le vecteur I correspond à l'image acquise (par exemple par les moyens d'acquisition 38) et le vecteur M est un masque qui correspond aux bits fiables du premier vecteur I. Par ailleurs, un bit du vecteur M qui vaut 0 représente un effacement (cil, flou, zone cachée par la paupière, etc.). Si un bit du masque M vaut 0, par convention le bit associé à l'image est fixé à 0 aussi.

Pour comparer deux codes binaires d'iris ($I_1$, $M_1$) et ($I_2$, $M_2$), une distance de Hamming normalisée NHD est communément utilisée :

$$NHD\big((I_1, M_1),(I_2, M_2)\big) = \frac{HW\big((I_1\,xor\,I_2)\,and\,(M_1\,and\,M_2)\big)}{HW(M_1\,and\,M_2)}$$

Où pour tout vecteur a, HW(a) représente le poids de Hamming de a.

Cette distance de Hamming normalisée NHD est ensuite comparée à un seuil t. Si la distance normalisée NHD est inférieure au seuil t, c'est une authentification ; autrement c'est un rejet.

On appelle f la fonction consistant à calculer cette distance de Hamming et à la comparer au seuil t. La fonction f se décompose en une série d'opérations booléennes élémentaires et peut donc être utilisée dans le cadre d'un circuit confus tel que décrit précédemment.

Pour des raisons pratiques de virgule flottante, la comparaison NHD < t est effectuée avec l'inégalité suivante :

$$2^m.HW\big((I_1\,xor\,I_2)\,and\,(M_1\,and\,M_2)\big) < 2^m.t.HW(M_1\,and\,M_2)$$

Avec $2^m$ qui est choisi pour s'assurer que $2^m t$ est un entier.

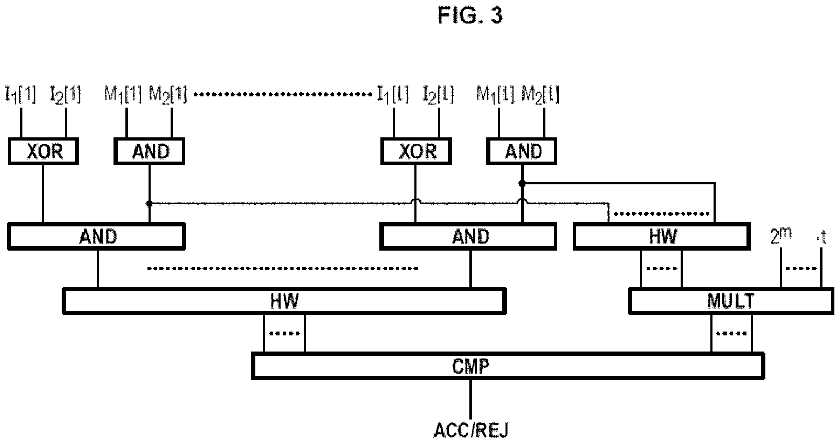

La **figure 3** illustre un schéma d'ensemble pour deux codes binaires d'iris 1 et 2 où le i$^{ème}$ bit coordonnée des vecteurs est représenté entre crochets. Le circuit est décomposé en sous-cases dénommées : AND pour l'opération booléenne « et », XOR pour l'opération booléenne de « ou exclusif », HW pour calculer le poids de Hamming, CMP pour la comparaison et MULT pour la multiplication. Dans le cas présent, comme $2^m t$ est connu, la multiplication peut en outre être remplacée par des additions. De tels circuits (MULT, HW, CMP, etc.) sont connus et sont présentés dans la référence [KSS].

Ainsi, la fonction f comprend une succession de portes AND et XOR. Il suffit, pour calculer f, d'entrer les valeurs {0 ; 1} des bits des coordonnées des vecteurs d'entrée I et M.

La sortie donnée par la fonction f peut correspondre à 1 si l'inégalité est vérifiée, auquel cas la correspondance est vérifiée et l'authentification validée ; la sortie peut correspondre à 0 sinon.

## L'authentification par visage

Dans le cas d'une donnée biométrique obtenue à partir d'une image de visage, chaque image de visage est traitée pour obtenir une donnée biométrique exploitable (par exemple par identification de positions des points caractéristiques du visage), et la fonction f à évaluer avec des circuits confus GC est la distance euclidienne calculée entre la donnée biométrique obtenue à partir de l'image d'enrôlement et chaque donnée biométrique obtenue à partir de chaque image de test, suivie d'une comparaison à un seuil.

## Similitudes entre les images de la vidéo

Afin de simplifier l'explication des procédés, les notations suivantes sont introduites : on souhaite évaluer la fonction f entre une donnée biométrique b de référence stockée dans la première unité client 10, et C données biométriques test b'$_1$...b'$_C$, où C est un entier positif strictement supérieur à 1.

La fonction f est donc évaluée avec les entrées (b'$_1$,...,b'$_C$) et b pour obtenir f(b,b'$_1$),...,f(b,b'$_C$). Chaque donnée biométrique d'entrée b, b'$_i$ est un vecteur de L bits b'$_i$ = (b'$_i$[1],...,b'$_i$[L]) avec i allant de 1 à C.

Dans le cas d'un code binaire d'iris avec image et masque, on a b'$_i$ = ($I_i$, $M_i$), où $I_i$ et $M_i$ sont des vecteurs de L bits.

Comme les C données b'$_i$ sont issues d'une même vidéo, elles présentent des similitudes, c'est-à-dire qu'il existe un certain nombre de bits qui présentent la même valeur sur les C données b'$_i$.

On définit ainsi l'ensemble S des indices invariants, défini par :

$$S = \big\{i \in [1..L] \mid \forall j_1, j_2 \in [1..C]^2, b'_{j_1}[i] = b'_{j_2}[i]\big\}$$

On définit complémentairement l'ensemble $\overline{S}$ des indices variants, défini par

$$\bar{S} = [1..L]\backslash S$$

Pour les codes binaires d'iris, on a donc :

$$S = \left\{i \in [1..L] \mid \forall j_1, j_2 \in [1..C]^2, I_{j_1}[i] = I_{j_2}[i] \; et \; M_{j_1}[i] = M_{j_2}[i]\right\}$$

Comme L=2048 on a aussi :

$$\bar{S} = [1..2048]\backslash S$$

Comme les deux ensembles forment une partition des indices des entrées (c'est-à-dire que $S \cup \bar{S} = [1..L]$ et $S \cap \bar{S} = \emptyset$), la distance de Hamming normalisée peut se décomposer sous la forme suivante, pour deux codes binaires d'iris $(I_1, M_1), (I_2, M_2)$ :

$$NHD\left((I_1, M_1), (I_2, M_2)\right) = \frac{NHD_{NUM}\left((I_1, M_1), (I_2, M_2)\right)}{NHD_{DEN}(M_1, M_2)}$$

$$= \frac{NHD_{NUM}\left((I_1, M_1), (I_2, M_2)\right)_S + NHD_{NUM}\left((I_1, M_1), (I_2, M_2)\right)_{\bar{S}}}{NHD_{DEN}(M_1, M_2)_S + NHD_{DEN}(M_1, M_2)_{\bar{S}}}$$

Avec

$$NHD_{NUM}\left((I_1, M_1), (I_2, M_2)\right) = HW((I_1 \, xor \, I_2) \, and \, (M_1 \, and \, M_2)),$$

$$NHD_{DEN}(M_1, M_2) = HW(M_1 \, and \, M_2),$$

$NHD_{NUM}(...)_S$, $NHD_{DEN}(...)_S$ étant l'évaluation de $NHD_{NUM}(...)$, $NHD_{DEN}(...)$ pour les indices de $S$, et

$NHD_{NUM}(...)_{\bar{S}}$, $NHD_{DEN}(...)_{\bar{S}}$ étant l'évaluation de $NHD_{NUM}(...)$, $NHD_{DEN}(...)$ pour les indices de $\bar{S}$.

Comme pour tout indice i de S, on a $\forall j_1 j_2 \in [1..C]^2, I_{j_1}[i] = I_{j_2}[i]$ *et* $M_{j_1}[i] = M_{j_2}[i]$, on est assuré que $NHD_{NUM}((I_{j_1}, M_{j_1}), (I_{j_2}, M_{j_2}))_S$ et $NHD_{DEN}(M_{j_1}, M_{j_2})_S$ sont indépendants de $j_2$ et $j_1$. En pratique, un des deux codes d'iris utilisé dans NHD est le code de l'iris enrôlé $(I_b, M_b)$, donc on est assuré que pour $\forall j \in [1..C]$, $NHD_{NUM}((I_b, M_b), (I_j M_j))_S$ et $NHD_{DEN}(M_b, M_j)_S$ sont indépendants de j.

Il est donc possible de décomposer la fonction f (qui est ici fonction de NHD et de t) à évaluer en deux sous-fonction $f_S$ et $f_{\bar{S}}$, l'une concernant les entrées et les sorties qui sont inchangées sur les C données biométriques et l'autre concernant les entrées et les sorties dont la valeur n'est pas identique pour toutes les C données. Les bits de b sont quant à eux des entrées réparties sur les deux sous-fonctions $f_S$ et $f_{\bar{S}}$, selon l'appartenance à S ou non du bit de b'$_i$ utilisé dans le calcul élémentaire avec le bit associé de b.

A ces deux sous-fonctions sont associés respectivement : un circuit confus $GC^S$ dit « invariant », associé à la fonction $f_S$, qui est identique pour les C données b'$_1$,..,b'$_C$ (l'évaluation du dénominateur et du numérateur de NHD pour les entrées appartenant à S) et C circuits confus $GC_1^{\bar{S}}, ..., GC_C^{\bar{S}}$ dits « variants », associés à C fonctions $f_{\bar{S}}$, dont chacun est propre à une des C données b'$_1$,..,b'$_C$ (l'évaluation du dénominateur et du numérateur de NHD pour les autres entrées), suivie du regroupement des résultats et de la comparaison à un seuil. Il y a ainsi C+1 circuits confus à générer, mais les C circuits confus $GC_1^{\bar{S}}, ..., GC_C^{\bar{S}}$ à évaluer pour chaque donnée présentent une complexité moindre.

En minimisant le nombre de portes logiques et en minimisant le nombre de fils dont la valeur dépend d'au moins une entrée dont l'indice appartient à $\bar{S}$, l'évaluation des circuits confus sera améliorée.

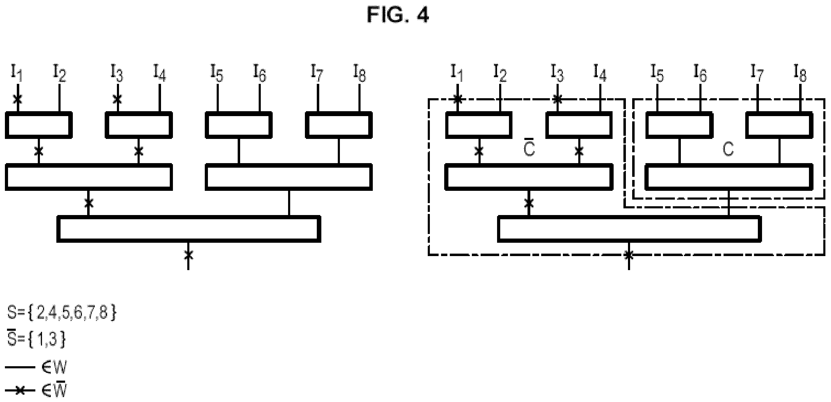

La **figure 4** illustre un schéma simplifié de ce qui a été expliqué précédemment. Le terme de fil désigne les entrées et les sorties entre les opérations logiques élémentaires. L'ensemble de fils invariants est noté W, et son complémentaire $\overline{W}$. Les notations sont propres à cette figure. Ici $S$ = {2,4,5,6,7,8}.

A présent, deux variantes d'un procédé d'authentification vont être décrites. Ces deux variantes utilisent chacune le fait qu'une partie de la décomposition de f en fonctions élémentaires peut demeurer invariante du fait des similitudes qui peuvent exister entre les C données.

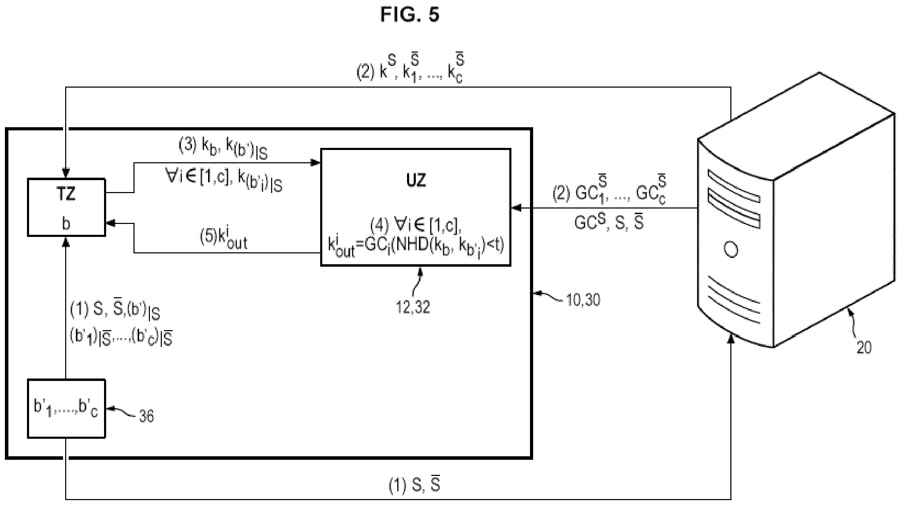

La première variante, illustrée en **figure 5,** permet de minimiser le nombre de circuits confus à générer et donc à évaluer. Mais il n'est pas possible de générer les circuits confus lors d'une phase de pré-calculs car ils dépendent de l'ensemble S qui dépend lui-même des données biométriques test b'$_1$,...,b'$_C$ de l'unité client 30.

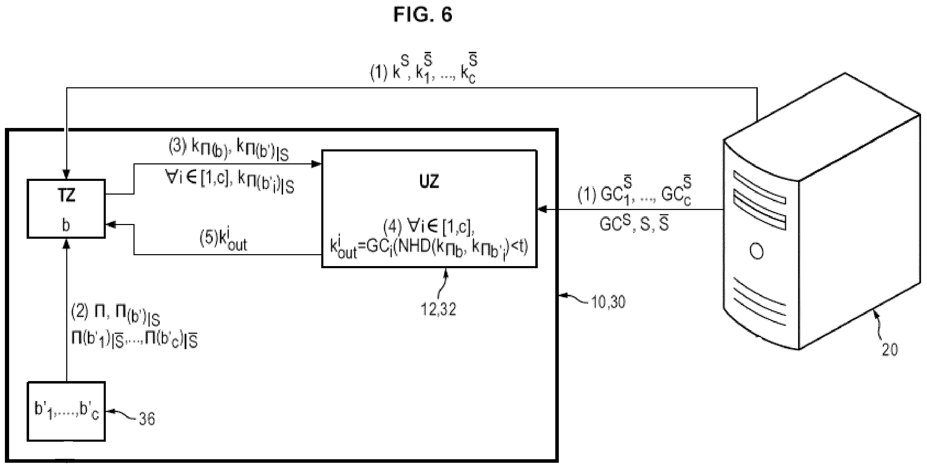

La deuxième variante, illustrée en **figure 6,** permet de limiter le nombre de circuits confus à générer (sans nécessairement le minimiser). Mais par rapport à la première variante, les circuits confus peuvent être pré-calculés avant l'acquisition des données biométriques test b'$_1$,...,b'$_C$ par l'unité client 30 car les circuits confus sont indépendants des données biométriques test b'$_1$,...,b'$_C$ de l'unité client 30.

Première variante

Dans une première étape, E1, la deuxième unité client 30, à partir des données biométriques test b'$_1$,...,b'$_C$ détermine l'ensemble S, en identifiant les bits invariants entre toutes les images. Cette étape E1 peut être précédée d'une étape E0 d'acquisition desdites données par les moyens d'acquisition 38.

Dans une deuxième étape E2, la deuxième unité client 30 envoie l'ensemble S relatif aux indices invariants au serveur 20 pour que celui-ci puisse générer des circuits confus comme présentés précédemment.

Dans une troisième étape E3, le serveur décompose la fonction f en deux sous-fonctions $f_S$ et $f_{\overline{S}}$ pour générer un circuit confus invariant $GC^S$ et pour générer C circuits confus variants $GC_1^{\overline{S}}, ..., GC_c^{\overline{S}}$. Pour évaluer la fonction f pour une donnée biométrique b'$_i$, il faut ainsi évaluer $GC^S$ et $GC_i^{\overline{S}}$. On note $GC_i$ le circuit confus composé de $GC^S$ et $GC_i^{\overline{S}}$, avec i allant de 1 à C.

Dans une quatrième étape E4, concomitante à l'étape E3, le serveur 20 génère aléatoirement les clés de codage $k^S, k_1^{\overline{S}}, ..., k_c^{\overline{S}}$ pour les C+1 circuits confus.

Dans une cinquième étape E5, le serveur 20 envoie les circuits confus à une parmi les deux unités clients 10, 30. Pour des raisons de clarté, on supposera que le serveur 20 les envoie à la première unité client 10, mais il peut aussi alternativement les envoyer à la deuxième unité client 30

Ensuite, dans une sixième étape E6, les deux unités clients 10, 30 récupèrent auprès du serveur 20 par transfert inconscient les clés de codage $k_b$, $k_{b'}$ correspondant aux valeurs des bits des entrées de la fonction f à évaluer pour chaque circuit confus.

Chaque unité client récupère les clés qui concernent la donnée biométrique dont elle dispose : la première unité client 10 récupère un ensemble de clés $k_b$ comprenant une clé associée à chaque bit de la donnée b ; la deuxième unité client 30 récupère un ensemble de clés $k_{b'}$ comprenant une clé pour chaque bit associé à un indice appartenant à S et C clés pour chaque bit associé à un indice appartenant à $\overline{S}$.

Selon l'exemple donné ci-dessus dans lequel la donnée b comprend 2048 bits, l'ensemble de clé $k_b$ comprend 2048 clés et l'ensemble de clé $k_{b'}$ comprend 1 x $|S|$ + C x $|\overline{S}|$ clés, où $|S|$ désigne le nombre d'indices dans l'ensemble S et $|\overline{S}|$ désigne le nombre d'indices dans l'ensemble $\overline{S}$. L'ensemble de clé $k_{b'}$ comprend donc un nombre de clés inférieur à C x 2048 clés.

Dans une septième étape E7, la deuxième unité client 30 envoie ses clés de codage à la première unité client 10. Comme il s'agit de clés codées, la première unité client 10 ignore la valeur masquée du bit.

Dans une étape E8, avec toutes les clés, la première unité client 10 peut évaluer à l'aide de son unité de calcul 12 la fonction f pour chacune des C données b'$_1$,...,b'$_C$ et la donnée b.

Pour les C images, le circuit confus invariant $GC^S$ n'a à être évalué qu'une seule fois et peut être utilisé pour les C évaluations de la fonction f, d'où un gain de temps et de ressources. Les circuits confus variants $GC_1^{\overline{S}}, ..., GC_c^{\overline{S}}$ sont eux aussi exécutés.

On obtient en sortie C clés de codage

$$k_{out}^i = GC_i\left(NHD\left(k_b, k_{b_i'}\right) < t\right).$$

Enfin, dans une étape E9, il suffit de déterminer à quelle valeur les clés de sorties $k_{out}^i$ correspondent : par exemple 1 pour dire que l'inégalité est vérifiée (authentification validée) et 0 pour dire qu'elle n'est pas vérifiée (rejet). Comme expliqué précédemment, l'étape E9 comprend soit l'envoi par le serveur de la table de concordance à l'unité client 10 pour effectuer la conversion des clés de sorties, soit l'envoi par l'unité client 10 au serveur pour que celui-ci effectue la conversion et obtienne le résultat.

Ce mode de mise en oeuvre du procédé nécessite néanmoins un échange entre les unités client 10, 30 et le serveur 20 pour pouvoir mettre en oeuvre l'authentification. En effet, le serveur 20 a besoin de connaitre exactement S pour construire les circuits confus. Par conséquent, le serveur 20 ne peut pas créer les circuits confus lors d'une phase dite de pré-calculs.

Deuxième variante du procédé

A cette fin, il est nécessaire de s'affranchir de la variabilité de l'ensemble S tel qu'il a été défini précédemment et qui dépend des données biométriques acquises b'$_1$,..,b'$_C$.

Pour cela, dans une étape préalable F1, réalisée à l'aide d'une base de données de données biométriques de même nature que celles qui doivent être utilisées dans le procédé, on évalue une marge supérieure $|\overline{S}_{max}|$ du nombre d'indices que contient l'ensemble $\overline{S}$. Cette valeur $|\overline{S}_{max}|$ est stockée dans la mémoire 24 du serveur 20 et va être utilisée pour la génération du circuit confus invariant $GC^S$ et de circuits confus variants $GC_1^{\overline{S}}, ..., GC_c^{\overline{S}}$. Pour des raisons de simplifications, on considère ainsi que $\forall i,j \in [|\overline{S}_{max}| + 1..L]^2, \forall j_1, j_2 \in [1..C]^2, I_{j_1}[i] = I_{j_2}[i]$ et $M_{j_1}[i] = M_{j_2}[i]$.

Alternativement, on peut évaluer une marge inférieure $|S_{max}|$ du nombre d'indices que contient l'ensemble S. On a donc $|S_{max}| = L - |\overline{S}_{max}|$

La description sera faite pour $|\overline{S}_{max}|$.

Comme la création des circuits confus se fait indépendamment des données biométriques de test b'$_i$, l'ordonnancement des indices appartenant à S (ou $\overline{S}$) peut être quelconque. A cet égard, les données b'i sont permutées lors d'une étape F0 décrite ci-après pour garantir que les indices des bits invariants sont dans S.

Dans une étape suivante F2, la marge supérieure $|\overline{S}_{max}|$ est stockée dans la mémoire 24 du serveur 20.

La troisième étape F3 est similaire à l'étape E3.

La quatrième étape F4 est similaire à l'étape E4.

La cinquième étape F5 est similaire à l'étape E5.

La sixième étape F6 est similaire à l'étape E6, sauf que les clés de codage $k_b, k_b$, correspondent aux valeurs des bits permutés des entrées de la fonction f à évaluer, notées $k_{\Pi(b)}, k_{\Pi(b')}$. En particulier, l'étape de mise en oeuvre de la permutation sur les bits des données (b'$_1$,...,b'$_C$) permet à la deuxième unité client de récupérer les clés correspondant aux bons ensembles S et $\overline{S}$. La première unité client 10 récupère un ensemble de clés $k_{\Pi(b)}$ relatives aux bits permutés de la donnée biométrique de référence b et la deuxième unité client 30 récupère un ensemble de clés $k_{\Pi(b')}$ relatives aux bits permutés des données biométriques de test (b'$_1$,...,b'$_C$), l'ensemble comprenant une clé pour chacun des indices de bits appartenant à S et C clés pour chacun des indices appartenant à $\overline{S}$.

La septième étape F7 est similaire à l'étape E7.

La huitième étape F8 est similaire à l'étape E8.

La neuvième étape F9 est similaire à l'étape E9. Préférablement, la table de concordance T est envoyée avec les circuits confus, afin que l'authentification puisse se faire sans échange avec le serveur 20 après acquisition des données de test.

D'une façon similaire à E0, cette variante comprend une étape F0 qui peut comprendre une acquisition des données biométriques test b'$_1$ à b'c par l'unité client 30.

L'étape F0 comprend également l'application, par la deuxième unité client 30, d'une permutation sur les bits de ces données biométriques test (b'$_1$,...,b'$_C$), en fonction de la valeur de $|\overline{S}_{max}|$ calculée à l'étape F1, afin que les bits des données biométriques tests soient identiques sur les indices $[|\overline{S}_{max}| + 1..L]$.

Ceci permet de garantir que les bits invariants entre les données b'$_1$ à b'c soient bien dans l'ensemble S et que les autres bits soient dans l'ensemble $\overline{S}$.

Dans cette variante, l'étape F0 d'acquisition des données est donc effectuée après l'étape F1. Elle peut être avantageusement effectuée après l'une quelconque des étapes F1 à F5, qui sont réalisées dans une phase dite de pré-calcul.

Cette deuxième variante du procédé est moins efficace que le premier en matière de temps de calcul puisque la valeur $|\overline{S}_{max}|$, respectivement $|S_{max}|$, est choisie de façon à être supérieure, respectivement inférieure, au nombre réel de bits variants, respectivement invariants. Néanmoins, il permet une génération en amont des circuits confus, de façon indépendante aux données biométriques b'$_1$,..,b'$_C$, ce qui permet d'accélérer la phase d'authentification (si on ne prend pas en compte les pré-calculs).

Cas où les deux unités clients sont un même terminal client

Ce cas est illustré sur les **figures 5 et 6.**

Le terminal comprend généralement une zone de confiance TZ et une zone de non-confiance UZ. La zone de confiance comprend peu de moyens de calcul et peu de mémoire, à l'inverse de la zone de non-confiance.

La zone de confiance stocke la donnée biométrique de référence b et la zone de non-confiance va évaluer la fonction f en exécutant les circuits confus.

Il s'agit de la zone de confiance qui reçoit les clés de codage. Par conséquent, il y a alors un transfert depuis les moyens d'acquisition 38 vers la zone de confiance des données b'$_1$,..,b'$_C$.

Pour la première variante du procédé, il y a un transfert des bits des données appartenant à S et un transfert des bits des données appartenant à $\overline{S}$, afin que la zone de confiance récupère les clés adéquats.

Pour la seconde variante du procédé, il y a un transfert des bits de données permutées qui appartiennent à S et un transfert des bits de données permutées appartenant à $\overline{S}$.

Cas où le serveur et une des deux unités clients sont une même entité

Pour simplifier, on appelle « serveur » le regroupement du serveur 20 et d'une des deux unités clients 10 et appelons « client » l'autre unité client 30 qui n'est pas incluse dans le serveur. Le serveur crée les circuits confus et le client évalue les circuits confus.

Pour obtenir l'ensemble des clés des bits d'entrée, le serveur envoie les clés qui correspondent à ses propres entrées au client. Il n'y a pas besoin de transferts inconscients pour ces clés car le serveur a créé les circuits confus. Le client quant à lui récupère les clés qui correspondent à ses propres entrées à l'aide de transferts inconscients avec le serveur, pour que ce dernier ne puisse pas déduire les entrées du client.

REFERENCES

[SMC]: Hazay, Carmit; Lindell, Yehuda: Efficient Secure Two-Party Protocols - Techniques and Constructions. Information Security and Cryptography. Springer, 2010.

[YAO]: A. C.-C. Yao. How to generate and exchange secrets (extended abstract). In FOCS, 1986.

[SAD] : A.-R. Sadeghi, T. Schneider, and I. Wehrenberg. Efficient privacy-preserving face récognition. In ICISC, 2009.

[SNY]: Snyder, Peter: Yao's Garbled Circuits: Recent Directions and Implementations, 2014,

[IRIS]: John Daugman « How iris recognition works »,

[KSS]: Kolesnikov, Vladimir; Sadeghi, Ahmad-Reza; Schneider, Thomas: Improved Garbled Circuit Building Blocks and Applications to Auctions and Computing Minima. In: Cryptology and Network Security, 8th International Conference, CANS. 2009

[GE]: Gentry, Craig; Gorbunov, Sergey; Halevi, Shai; Vaikuntanathan, Vinod; Vinayagamurthy, Dhinakaran: How to Compress (Reusable) Garbled Circuits. IACR Cryptology ePrint Archive, 2013:687, 2013.

[GO]: Goldwasser, Shafi; Kalai, Yael Tauman; Popa, Raluca A.; Vaikuntanathan, Vinod; Zeldovich, Nickolai: Reusable garbled circuits and succinct functional encryption. In: Symposium on Theory of Computing Conference, STOC'13. pp. 555-564, 2013.

[Ra] : Rabin, Michael O.: How To Exchange Secrets with Oblivious Transfer. Harvard University Technical Report 81, 1981.

**Revendications**

1. Procédé d'authentification d'un utilisateur mis en oeuvre à l'aide d'un système comprenant :

   - une première unité client (10) comprenant une mémoire (14) dans laquelle est stockée une donnée biométrique de référence (b),
   - une deuxième unité client (30) comprenant des moyens d'acquisition d'au moins une donnée biométrique de test (b'), et

- un serveur (20), configuré pour générer des circuits confus (GC) d'évaluation de fonctions (f), chaque circuit confus (GC) ayant pour entrées un ensemble de clés de chiffrement de bits de données d'entrée de la fonction (f) à évaluer et pour sortie les clés de chiffrement correspondant aux bits du résultat de la fonction (f) évaluée, et dans lequel les étapes de calcul de la fonction (f) sont décomposées sous forme d'opérations logiques élémentaires, chaque circuit confus (GC) comprenant en outre un ensemble de clés (k) de codage de chacune des entrées et sorties possibles de chaque opération logique élémentaire,

le procédé comprenant la comparaison d'un nombre C de données de test (b'$_1$,...,b'$_C$) acquises sur l'utilisateur par la deuxième unité client (30) à la donnée de référence (b), ladite comparaison comprenant le calcul, au moyen de circuits confus (GC), d'une distance entre la donnée de référence (b) et chaque donnée de test (b'$_1$,..,b'$_C$), **caractérisé en ce que** la comparaison comprend la mise en oeuvre des étapes suivantes :

- (E3, F3) à partir d'un ensemble S comprenant des indices des données de tests (b'$_1$,...,b'$_C$), tels que la valeur du bit de chaque donnée de test associé à un indice de l'ensemble S est invariante sur toutes les C données de test (b'$_1$,...,b'$_C$), le serveur décompose la fonction à évaluer en :

une sous-fonction $f_S$ qui comprend toutes les opérations logiques dont la sortie dépend uniquement de bits d'entrée dont l'indice appartient audit ensemble S et génère pour l'évaluation de cette sous-fonction $f_S$ un unique circuit confus ($GC^S$) dit invariant,
une sous-fonction $f_{\bar{S}}$ qui comprend toutes les opérations logiques de la fonction f non-évaluée par la sous-fonction $f_S$ et génère, pour chacune des C données de test (b'$_1$,...,b'$_C$), un circuit confus dit variant $\left(GC_1^{\bar{S}}, \dots, GC_c^{\bar{S}}\right)$ pour l'évaluation de la sous-fonction $f_{\bar{S}}$,

- (E4, F4) le serveur (20) génère aléatoirement les clés de codage $\left(k^S, k_1^{\bar{S}}, \dots, k_c^{\bar{S}}\right)$ pour l'unique circuit confus invariant ($GC^S$) et pour les C circuits confus variants $\left(GC_1^{\bar{S}}, \dots, GC_c^{\bar{S}}\right)$,

- (E5, F5) le serveur envoie les circuits confus $\left(GC^S, GC_1^{\bar{S}}, \dots, GC_c^{\bar{S}}\right)$ à l'une des unités clients (10, 30),
- (E6, F6) les deux unités clients récupèrent auprès du serveur (20) par transfert inconscient (OT) :
des clés de codages $(k_b, k_{b'})$ correspondant aux valeurs des bits des entrées de la fonction (f) à évaluer en fonction des données de référence (b) et des C données de test (b') respectivement à leur disposition, la première unité client (10) récupérant un ensemble de clés ($k_b$) relatives à la donnée biométrique de référence (b) et la deuxième unité client (30) récupérant un ensemble de clés ($k_{b'}$) comprenant une clé pour chaque bit associé à un indice appartenant à l'ensemble S et C clés pour chaque bit associé à un indice n'appartenant pas à S, et
- (E7, F7) l'unité client (10, 30) ayant reçu les circuits confus récupère les clés de codages ($k_b$,$k_{b'}$) auprès de l'autre unité client (10, 30), et (E8, F8) évalue la fonction (f) pour chacune des C données tests, avec comme entrées les clés récupérées, en exécutant les circuits confus $\left(GC^S, GC_1^{\bar{S}}, \dots, GC_c^{\bar{S}}\right)$,
- (E9, F9) en fonction desdites évaluations de f, authentification ou non de l'utilisateur ou de l'objet.

2. Procédé selon la revendication 1, dans lequel l'ensemble (S) d'indices est déterminé dans une étape préalable (E1) par la deuxième unité client (30) par analyse des bits invariants entre les C données de test (b'$_1$,...,b'$_C$).

3. Procédé selon la revendication 1, dans lequel
l'ensemble (S) d'indices comprend un nombre fixé d'indices (L- $|\bar{S}_{max}|$), les indices étant choisis d'une façon quelconque,
la deuxième unité client (30) applique une permutation (n) aux bits de chaque donnée (b'i) invariants entre les C données de test pour que lesdits indices desdits bits invariants correspondent aux indices de l'ensemble d'indices (S), et
les clés de codage sont récupérées pour les bits permutés.

4. Procédé selon la revendication 3, dans lequel le nombre fixé d'indices de l'ensemble d'indices (S) est déterminé au préalable par une analyse de base de données, le nombre fixé d'indices de l'ensemble d'indices étant choisi pour être inférieur au nombre réel de bits invariants entre les C données de test.

5. Procédé selon l'une des revendications 3 ou 4, dans lequel les étapes de décomposition de la fonction à évaluer, de génération des clés de codage et d'envoi des circuits confus à l'une des unités clients sont mises en oeuvre préalablement à l'acquisition des données tests ou à l'application de la permutation auxdites données.

6. Procédé selon l'une quelconque des revendications 1 à 5, dans lequel les deux unités clients (10, 30) forment un seul terminal-client.

7. Procédé selon l'une quelconque des revendications 1 à 5, dans lequel le serveur (20) et l'une des deux unités clients (10, 30) forment une unique entité, et dans lequel l'autre unité client (30, 10) reçoit les circuits confus.

8. Procédé selon l'une quelconque des revendications précédentes, dans lequel le serveur (20) envoie aussi à l'unité client (10, 30) une table de concordance (T) des sorties de chaque circuit confus (C), de sorte que l'unité client (10, 30) qui évalue la fonction f puisse connaitre la valeur des clés de sortie de l'évaluation $(k_{out}^i)$.

9. Procédé selon l'une des revendications 1 à 8, comprenant en outre une étape au cours de laquelle l'unité client (10,30) ayant évalué la fonction envoie au serveur (20) les clés de sortie de l'évaluation $(k_{out}^i)$ et le serveur en déduit, à partir de la table de concordance des sorties de chaque circuit confus, les évaluations de la fonction f.

10. Procédé selon l'une quelconque des revendications précédentes, dans lequel les données (b,b'$_1$,...,b'$_C$) sont des codes binaires d'iris.

11. Procédé selon l'une quelconque des revendications précédentes, dans lequel dans lequel la fonction (f) à évaluer comprend le calcul de distance de Hamming normalisée entre la donnée biométrique de référence (b) et chacune des C données de test (b'$_1$,..,b'$_C$) et comprend la comparaison de cette distance à un seuil (t).

12. Procédé selon l'une quelconque des revendications précédentes, dans lequel le circuit confus invariant ($GC^S$) est évalué une seule fois pour les C données de test.

13. Système d'authentification d'individus, comprenant :

- une première unité client (10) comprenant une mémoire (14),
- une deuxième unité client (30) comprenant des moyens d'acquisition d'au moins une donnée de test (b'$_1$,..,b'$_C$), et
- un serveur (20), configuré pour générer des circuits confus (GC) d'évaluation de fonctions (f), chaque circuit confus (GC) ayant pour entrées un ensemble de clés de chiffrement de bits de données d'entrée de la fonction (f) à évaluer et pour sortie les clés de chiffrement correspondant aux bits du résultat de la fonction (f) évaluée, et dans lequel les étapes de calcul de la fonction (f) sont décomposées sous forme d'opérations logiques élémentaires, chaque circuit confus comprenant en outre un ensemble de clé (k) de codage de chacune des entrées et sorties possibles de chaque opération logique élémentaire,

le système étant **caractérisé en ce qu'**il est configuré pour mettre en oeuvre le procédé selon l'une des revendications 1 à 12.

14. Serveur (20), comprenant un calculateur (26) adapté pour générer des circuits confus (GC) d'évaluation d'une fonction (f) comprenant la comparaison d'une donnée de référence à une pluralité C de données de test, le serveur (20) étant **caractérisé en ce qu'**il est adapté pour, à partir d'un ensemble S comprenant des indices de données de tests, tels que la valeur du bit de chaque donnée de test associé à un indice de l'ensemble S est invariant sur toutes les C données de test (b'$_1$,..,b'$_C$), décomposer la fonction (f) à évaluer en :

une sous-fonction $f_S$ qui comprend toutes les opérations logiques dont la sortie dépend uniquement de bits d'entrée dont l'indice appartient audit ensemble S, et
une sous-fonction $f_{\overline{S}}$ qui comprend toutes les opérations logiques de la fonction f non-évaluée par la sous-fonction $f_S$,

et pour générer un unique circuit confus ($GC^S$) dit invariant pour l'évaluation de la sous-fonction $f_S$, et pour chacune des C données de test (b'$_1$,...,b'$_C$), un circuit confus dit variant $\left(GC_1^{\bar{S}}, \dots, GC_c^{\bar{S}}\right)$ pour l'évaluation de la sous-fonction $f_{\bar{S}}$,

15. Produit programme d'ordinateur, comprenant des instructions de code pour la mise en oeuvre d'un procédé comprenant la génération de circuits confus (GC) d'évaluation d'une fonction (f) comprenant la comparaison d'une donnée de référence à une pluralité C de données de test (b'$_1$,...,b'$_C$), ladite génération comprenant :

à partir d'un ensemble S comprenant des indices de données de tests, tels que la valeur du bit de chaque donnée de test (b'$_1$,..,b'$_C$) associé à un indice de l'ensemble S est invariant sur toutes les C données de test (b'$_1$,...,b'$_C$), la décomposition de la fonction (f) à évaluer en :

une sous-fonction $f_S$ qui comprend toutes les opérations logiques dont la sortie dépend uniquement de bits d'entrée dont l'indice appartient audit ensemble S, et
une sous-fonction $f_{\bar{S}}$ qui comprend toutes les opérations logiques de la fonction f non-évaluée par la sous-fonction $f_S$,

et la génération :

- d'un unique circuit confus (GC$^S$) dit invariant pour l'évaluation de la sous-fonction $f_S$, et,
- pour chacune des C données de test (b'$_1$,..,b'$_C$), d'un circuit confus dit variant $\left(GC_1^{\bar{S}}, \dots, GC_c^{\bar{S}}\right)$ pour l'évaluation de la sous-fonction $f_{\bar{S}}$, quand il est exécuté par un calculateur (26).

## Patentansprüche

1. Verfahren zur Authentifizierung eines Benutzers, durchgeführt mit Hilfe eines Systems, umfassend:

- eine erste Client-Einheit (10), umfassend einen Speicher (14), in welchem eine biometrische Referenzangabe (b) gespeichert ist,
- eine zweite Client-Einheit (30), umfassend Erfassungsmittel mindestens einer biometrischen Testangabe (b'), und
- einen Server (20), der konfiguriert ist, um konfuse Evaluierungsschaltkreise (GC) von Funktionen (f) zu generieren, wobei jeder konfuse Schaltkreis (GC) als Eingaben eine Einheit von Chiffrierschlüsseln von Bits von Eingabeangaben der zu evaluierenden Funktion (f) und als Ausgabe die den Bits des Ergebnisses der evaluierten Funktion (f) entsprechenden Chiffrierschlüssel hat, und wobei die Berechnungsschritte der Funktion (f) in Form elementarer logischer Operationen unterteilt sind, wobei jeder konfuse Schaltkreis (GC) ferner eine Einheit von Codierschlüsseln (k) jeder der möglichen Eingaben und Ausgaben jeder elementaren logischen Operation umfasst, wobei das Verfahren den Vergleich einer Anzahl C von bei dem Benutzer von der zweiten Client-Einheit (30) erfassten Testangaben (b'$_1$,...,b'$_C$) mit der Referenzangabe (b) umfasst, wobei der Vergleich die Berechnung, mit Hilfe konfuser Schaltkreise (GC), einer Distanz zwischen der Referenzangabe (b) und jeder Testangabe (b'$_1$,..., b'$_C$) umfasst,

**dadurch gekennzeichnet, dass** der Vergleich die Durchführung der folgenden Schritte umfasst:

- (E3, F3), auf der Basis einer Einheit S, umfassend Indizes der Testangaben (b'$_1$,..., b'$_C$) derart, dass der Wert des Bits jeder Testangabe, zugeordnet einem Index der Einheit S, über alle C-Testangaben (b'$_1$,..., b'$_C$) invariant ist, wobei der Server die zu evaluierende Funktion zerlegt in:

eine Unterfunktion $f_S$, die alle logischen Operationen umfasst, deren Ausgabe nur von Eingabebits abhängt, deren Index zu der Einheit S gehört und für die Evaluierung dieser Unterfunktion $f_S$ einen einzigen, sogenannten invarianten konfusen Schaltkreis (GC$^S$) generiert,
eine Unterfunktion fs, die alle logischen Operationen der von der Unterfunktion $f_S$ nicht evaluierten Funktion f umfasst und für jede der C-Testangaben (b'$_1$,..., b'$_C$) einen sogenannten varianten konfusen Schaltkreis

$\left(GC_1^{\bar{S}}, \dots, GC_c^{\bar{S}}\right)$ für die Evaluierung der Unterfunktion $f_S$ generiert,

- (E4, F4), der Server (20) generiert willkürlich Codierschlüssel $(k^S, k_1^S, ..., k_c^S)$ für den einzigen invarianten konfusen Schaltkreis ($GC^S$) und für die C varianten konfusen Schaltkreise $(GC_1^S, ..., GC_c^S)$,

- (E5, F5), der Server sendet die konfusen Schaltkreise $(GC^S, GC_1^S, ..., GC_c^S)$ an eine der Client-Einheiten (10, 30),
- (E6, F6), die zwei Client-Einheiten rufen bei dem Server (20) mittels Oblivious Transfer (OT) ab:

Codierschlüssel ($k_b, k_{b'}$), die den Werten der Bits der Eingaben der zu evaluierenden Funktion (f) entsprechen in Abhängigkeit von den Referenzangaben (b) und den C-Testangaben (b'), die jeweils zu ihrer Verfügung stehen, wobei die erste Client-Einheit (10) eine Einheit von Schlüsseln ($k_b$) relativ zu der biometrischen Referenzangabe (b) abruft und die zweite Client-Einheit (30) eine Einheit von Schlüsseln ($k_{b'}$) abruft, die einen Schlüssel für jedes Bit umfasst, das einem Index zugeordnet ist, zugehörig zu der Einheit S, und C-Schlüssel für jedes Bit, das einem Index zugeordnet ist, der nicht zu S gehört, und

- (E7, F7), wobei die Client-Einheit (10, 30), welche die konfusen Schaltkreise erhalten hat, die Codierschlüssel ($k_b$, $k_{b'}$) bei der anderen Client-Einheit (10, 30) abruft, und (E8, F8) die Funktion (f) für jede der C-Testangaben evaluiert, mit den abgerufenen Schlüsseln als Eingaben, bei Ausführung der konfusen Schaltkreise $(GC^S, GC_1^S, ..., GC_c^S)$,

- (E9, F9), in Abhängigkeit der Evaluierungen von f, Authentifizierung oder nicht des Benutzers oder des Objekts.

2. Verfahren nach Anspruch 1, wobei die Indizeseinheit (S) in einem vorherigen Schritt (E1) von der zweiten Client-Einheit (30) durch Analyse der invarianten Bits zwischen den C-Testangaben (b'$_1$,..., b'c) bestimmt wird.

3. Verfahren nach Anspruch 1, wobei
die Indizeseinheit (S) eine festgelegte Anzahl von Indizes (L- $|\overline{S}_{max}|$) umfasst, wobei die Indizes beliebig ausgewählt sind,
die zweite Client-Einheit (30) eine Permutation (n) auf die bei den C-Testangaben invarianten Bits jeder Angabe (b'$_i$) anwendet, damit die Indizes der invarianten Bits den Indizes der Indizeseinheit (S) entsprechen, und
die Codierschlüssel für die permutierten Bits abgerufen werden.

4. Verfahren nach Anspruch 3, wobei die festgelegte Anzahl von Indizes der Indizeseinheit (S) zuvor durch eine Datenbankanalyse bestimmt wird, wobei die festgelegte Anzahl von Indizes der Indizeseinheit ausgewählt ist, um kleiner als die reale Anzahl der bei den C-Testangaben invarianten Bits zu sein.

5. Verfahren nach einem der Ansprüche 3 oder 4, wobei die Schritte der Zerlegung der zu evaluierenden Funktion, der Generation der Codierschlüssel und des Versands der konfusen Schaltkreise an eine der Client-Einheiten vor der Erfassung der Testangaben oder der Anwendung der Permutation auf die Angaben durchgeführt werden.

6. Verfahren nach einem der Ansprüche 1 bis 5, wobei die zwei Client-Einheiten (10, 30) einen einzigen Client-Terminal bilden.

7. Verfahren nach einem der Ansprüche 1 bis 5, wobei der Server (20) und eine der zwei Client-Einheiten (10, 30) eine einzige Entität bilden, und wobei die andere Client-Einheit (30, 10) die konfusen Schaltkreise empfängt.

8. Verfahren nach einem der vorangehenden Ansprüche, wobei der Server (20) auch an die Client-Einheit (10, 30) eine Konkordanztabelle (T) der Ausgaben jedes konfusen Schaltkreises (C) sendet, so dass die Client-Einheit (10, 30), die die Funktion f evaluiert, den Wert der Ausgabeschlüssel der Evaluierung $(k_{out}^i)$ kennen kann.

9. Verfahren nach einem der Ansprüche 1 bis 8, umfassend ferner einen Schritt, bei dem die Client-Einheit (10, 30), die die Funktion evaluiert hat, an den Server (20) die Ausgabeschlüssel der Evaluierung $(k_{out}^i)$ sendet und der Server daraus auf der Basis der Konkordanztabelle der Ausgaben jedes konfusen Schaltkreises die Evaluierungen der Funktion f ableitet.

10. Verfahren nach einem der vorangehenden Ansprüche, wobei die Angaben (b, b'$_1$, ..., b'$_C$) binäre Iriscodes sind.

**11.** Verfahren nach einem der vorangehenden Ansprüche, wobei die zu evaluierende Funktion (f) die Berechnung der standardisierten Hamming-Distanz zwischen der biometrischen Referenzangabe (b) und jeder der C-Testangaben ($b'_1$,..., $b'_C$) umfasst und den Vergleich dieser Distanz mit einem Grenzwert (t) umfasst.

**12.** Verfahren nach einem der vorangehenden Ansprüche, wobei der invariante konfuse Schaltkreis ($GC^S$) nur einmal für die C-Testangaben evaluiert wird.

**13.** System zur Authentifizierung von Individuen, umfassend:

- eine erste Client-Einheit (10), umfassend einen Speicher (14),
- eine zweite Client-Einheit (30), umfassend Erfassungsmittel mindestens einer Testangabe ($b'_1$,..., $b'_C$), und
- einen Server (20), der konfiguriert ist, um konfuse Evaluierungsschaltkreise (GC) von Funktionen (f) zu generieren, wobei jeder konfuse Schaltkreis (GC) als Eingaben eine Einheit von Chiffrierschlüsseln von Bits von Eingabeangaben der zu evaluierenden Funktion (f) und als Ausgabe die den Bits des Ergebnisses der evaluierten Funktion (f) entsprechenden Chiffrierschlüssel hat, und wobei die Berechnungsschritte der Funktion (f) in Form elementarer logischer Operationen unterteilt sind, wobei jeder konfuse Schaltkreis (GC) ferner eine Einheit von Codierschlüsseln (k) jeder der möglichen Eingaben und Ausgaben jeder elementaren logischen Operation umfasst,

wobei das System **dadurch gekennzeichnet ist, dass** es konfiguriert ist, um das Verfahren nach einem der Ansprüche 1 bis 12 durchzuführen.

**14.** Server (20), umfassend einen Rechner (26), der ausgebildet ist, um konfuse Evaluierungsschaltkreise (GC) einer Funktion (f) zu generieren, umfassend den Vergleich einer Referenzangabe mit einer Vielzahl C von Testangaben, wobei der Server (20) **dadurch gekennzeichnet ist, dass** er ausgebildet ist, um auf der Basis einer Einheit S, umfassend Indizes von Testangaben derart, dass der Wert des Bits jeder Testangabe, zugeordnet einem Index der Einheit S, über alle C-Testangaben ($b'_1$, ..., $b'_C$) invariant ist, die zu evaluierende Funktion (f) zu zerlegen in:

eine Unterfunktion fs, die alle logischen Operationen umfasst, deren Ausgabe nur von Eingabebits abhängt, deren Index zu der Einheit S gehört, und
eine Unterfunktion fs, die alle logischen Operationen der von der Unterfunktion $f_S$ nicht evaluierten Funktion f umfasst,

und um einen einzigen sogenannten invarianten konfusen Schaltkreis ($GC^S$) für die Evaluierung der Unterfunktion $f_S$ zu generieren und für jede der C-Testangaben ($b'_1$,..., $b'_C$) einen sogenannten varianten konfusen Schaltkreis

$(GC_1^{\bar{S}}, ..., GC_C^{\bar{S}})$ für die Evaluierung der Unterfunktion $f_{\bar{S}}$ zu generieren.

**15.** Rechnerprogrammprodukt, umfassend Codebefehle für die Durchführung eines Verfahrens, umfassend die Generierung konfuser Evaluierungsschaltkreise (GC) einer Funktion (f), umfassend den Vergleich einer Referenzangabe mit einer Vielzahl C von Testangaben ($b'_1$,..., $b'_C$), wobei die Generierung umfasst:

auf der Basis einer Einheit S, umfassend Indizes von Testangaben derart, dass der Wert des Bits jeder Testangabe ($b'_1$, ..., $b'_C$), zugeordnet einem Index der Einheit S, über alle C-Testangaben ($b'_1$, ..., $b'_C$) invariant ist, die Zerlegung der zu evaluierenden Funktion f in:

eine Unterfunktion *fs*, die alle logischen Operationen umfasst, deren Ausgabe nur von Eingabebits abhängt, deren Index zu der Einheit S gehört, und
eine Unterfunktion *fs*, die alle logischen Operationen der von der Unterfunktion *fs* nicht evaluierten Funktion f umfasst,

und die Generierung:

- eines einzigen sogenannten invarianten konfusen Schaltkreises ($GC^S$) für die Evaluierung der Unterfunktion fs, und
- für jede der C-Testangaben ($b'_1$,..., $b'_C$) eines sogenannten varianten konfusen Schaltkreises

$(GC_1^s, ..., GC_c^s)$ für die Evaluierung der Unterfunktion fs,

wenn es von einem Rechner (26) ausgeführt wird.

## Claims

1. A method for authenticating a user applied by means of the system comprising:

- a first client unit (10) comprising a memory (14) in which is stored a reference biometric datum (b),
- a second client unit (30) comprising means for acquiring at least one test biometric datum (b'), and
- a server (20), configured for generating garbled circuits (GC) for evaluating functions (f), each garbled circuit (GC) having as inputs a set of encryption keys of input data bits of the function (f) to be evaluated and as an output the encryption keys corresponding to the bits of the result of the evaluated function (f), and wherein the steps for calculating the function (f) are broken down into the form of elementary logical operations, each garbled circuit (GC) further comprising a set of encoding keys (k) of each of the possible inputs and outputs of each elementary logic operation,

the method comprising the comparison of a number C of test data ($b'_1$,...,$b'_C$) acquired on the user by the second client unit (30) with the reference datum (b), said comparison comprising the calculation, by means of garbled circuits (GC), of a distance between the reference datum (b) and each test datum ($b'_1$,..,$b'_C$), **characterized in that** the comparison comprises the application of the following steps:

- (E3, F3) from a set S comprising indices of the test data ($b'_1$,...,$b'_C$), such that the value of the bit of each test datum associated with an index of the set S is invariant on the whole of the C test data ($b'_1$,...,$b'_C$), the server breaks down the function to be evaluated into:

a sub-function $f_S$ which comprises all the logical operations for which the output exclusively depends on input bits for which the index belongs to said set S and generates for the evaluation of this sub-function $f_S$ a single garbled circuit ($GC^S$) a garbled circuit, named invariant garbled circuit,
a sub-function $f_{\bar{S}}$ which comprises all the logical operations of the function f non-evaluated by the sub-function $f_S$ and generates, for each of the C test data ($b'_1$,...,$b'_C$),, a garbled circuit, named variant garble

circuit $(GC_1^{\bar{S}}, ..., GC_c^{\bar{S}})$, for evaluation of the sub-function $f_S$,

- (E4, F4) the server (20) randomly generates encoding keys $(k^S, k_1^{\bar{S}}, ..., k_c^{\bar{S}})$ for the single invariant garbled circuit ($GC^S$) and for the C variant garbled circuits $(GC_1^{\bar{S}}, ..., GC_c^{\bar{S}})$,

- (E5, F5) the server sends the garbled circuits $(GC^S, GC_1^{\bar{S}}, ..., GC_c^{\bar{S}}, )$ to one of the client units (10, 30),
- (E6, F6) both client units recover from the server (20) by oblivious transfer (OT): encoding keys ($k_b$,$k_{b'}$) corresponding to the values of the input bits of the function (f) to be evaluated depending on the reference data (b) and on the C test data (b') respectively at their disposal, the first client unit (10) recovering a set of keys ($k_b$) relative to the reference biometric datum (b) and the second client unit (30) recovering a set of keys ($k_{b'}$) comprising a key for each bit associated with an index belonging to the set S and C keys for each bit associated with an index not belonging to S, and
- (E7, F7) the client unit (10, 30) having received the garbled circuits recovers the encoding keys ($k_b$,$k_{b'}$) from the other client unit (10, 30), and (E8, F8) evaluates the function (f) for each of the C test data, with as inputs the recovered keys, by executing the garbled circuits $(GC^S, GC_1^{\bar{S}}, ..., GC_c^{\bar{S}})$
- (E9, F9) depending on said evaluations of f, either authentication or not of the user or of the object.

2. The method according to claim 1, wherein the set (S) of indices is determined in a preliminary step (E1) by the second client unit (30) by analysis of the invariant bits between the C test data ($b'_1$,...,$b'_C$).

3. The method according to claim 1, wherein
the set (S) of indices comprises a set number of indices (L-5 $|\overline{S}_{max}|$), the indices being selected in any way,
the second client unit (30) applies an permutation ($\pi$) to the invariant bits of each datum ($b'_i$) between the C test data so that said indices of said invariant bits match to the indices of the set of indices (S), and
the encoding keys are recovered for the permuted bits.

4. The method according to claim 3, wherein the set number of indices of the set of indices (S) is determined beforehand by a database analysis, the set number of indices of the set of indices being selected so as to be less than the actual number of invariant bits between the C test data.

5. The method according to one of claims 3 or 4, wherein the steps for breaking down the function to be evaluated, for generating the encoding keys and for sending garbled circuits to one of the client units are applied before acquiring the test data or before applying the permutation to said data.

6. The method according to any of claims 1 to 5, wherein both client units (10, 30) form a single client terminal.

7. The method according to any of claims 1 to 5, wherein the server (20) and one of the two client units (10, 30) form a single entity, and wherein the other client unit (30, 10) receives the garbled circuits.

8. The method according to any of the preceding claims, wherein the server (20) also sends to the client unit (10, 30) a matching table (T) of the outputs of each garbled circuit (C), so that the client unit (10, 30) which evaluates the function f may determine the value of the output keys of the evaluation (*kouti*).

9. The method according to one of claims 1 to 8, further comprising a step during which the client unit (10,30) having evaluated the function send to the server (20) the output keys of the evaluation $\left(k_{out}^i\right)$ and the server infers therefrom, from the matching table of the outputs of each garbled circuit, the evaluations of the function f.

10. The method according to any of the preceding claims, wherein the data ($b,b'_1,...,b'_C$) are iris binary codes.

11. The method according to any of the preceding claims, wherein the function (f) to be evaluated comprises the calculation of the normalized Hamming distance between the reference biometric datum (b) and each of the C biometric test data ($b'_1,...,b'_C$) and comprises the comparison of this distance with a threshold (t).

12. The method according to any of the preceding claims, wherein the invariant garbled circuit ($GC^S$) is evaluated only once for the C test data.

13. A system for authentication of individuals, comprising:

   - a first client unit (10) comprising a memory (14),
   - a second client unit (30) comprising means for acquiring at least one test datum ($b'_1,...,b'_C$), and
   - a server (20), configured for generating garbled circuits (GC) for evaluating functions (f), each garbled circuit (GC) having as inputs a set of encryption keys for input data bits of the function (f) to be evaluated and as output, the encryption keys corresponding to the bits of the result of the evaluated function (f), and wherein the steps for calculating the function (f) are broken down into the form of elementary logic operations, each garbled circuit further comprising a set of encoding keys (k) of each of the possible inputs and outputs of each elementary logical operation,

   the system being **characterized in that** it is configured for applying the method according to one of claims 1 to 12.

14. A server (20), comprising a calculator (26) adapted for generating garbled circuits (GC) for evaluating a function (f) comprising the comparison of a reference datum with a plurality C of test data,
the server (20) being **characterized in that** it is adapted for, from a set S comprising indices of test data, such that the value of the bit of each test datum associated with an index of the set S is invariant on whole of the C test data ($b'_1,..,b'_C$), breaking down the function (f) to be evaluated into:

   a sub-function $f_S$ which comprises all the logical operations for which the output exclusively depends on the input bits for which the index belongs to said set S, and

a sub-function $f_{\bar{S}}$ which comprises all the logical operations of the function f non-evaluated by the sub-function $f_S$,

and for generating a single garbled ($GC^S$) circuit, named invariant garbled circuit, for evaluation of the sub-function $f_S$, and for each of the C test data (b'$_1$,...,b'$_C$), a garbled circuit $(GC_1^{\bar{S}}, \dots, GC_c^{\bar{S}})$, named variant garbled circuit, for evaluating the sub-function $f_{\bar{S}}$.

**15.** A computer program product, comprising code instructions for applying a method comprising the generation of garbled circuits (GC) for evaluation of a function (f) comprising the comparison of a reference datum with a plurality C of test data (b'$_1$,..,b'$_C$), said generation comprising:

from a set S comprising indices of the test data, such that the value of the bit of each test datum (b'$_1$,...,b'$_C$) associated with an index of the set S is invariant on all the C test data (b'$_1$,...,b'$_C$), the breaking down of the function (f) to be evaluated into:

a sub-function $f_S$ which comprises all the logical operations for which the output exclusively depends on input bits for which the index belongs to said set S, and

a sub-function $f_{\bar{S}}$ which comprises all the logical operations of the non-evaluated function f by the sub-function $f_S$,

and the generation:

- of a single garbled circuit ($GC^S$), named invariant garbled circuit for evaluating the sub-function $f_S$, and,

- for each of the C test data (b'$_1$,...,b'$_C$), of a garbled circuit $(GC_1^{\bar{S}}, \dots, GC_c^{\bar{S}})$, named variant garbled circuit, for evaluation of the sub-function $f_{\bar{S}}$,

when it is executed by a calculator (26).

# FIG. 1

## FIG. 2a

$x(0,1)$    $y(0,1)$

$k_0^x$  $k_1^x$    $k_0^y$  $k_1^y$

AND

$k_0^z$  $k_1^z$

$z(0,1)$

## FIG. 2b

| x | y | z |
|---|---|---|
| 0 | 0 | 0 |
| 0 | 1 | 0 |
| 1 | 0 | 0 |
| 1 | 1 | 1 |

## FIG. 2c

| x | y | z |
|---|---|---|
| $k_0^x$ | $k_0^y$ | $k_0^z$ |
| $k_0^x$ | $k_1^y$ | $k_0^z$ |
| $k_1^x$ | $k_0^y$ | $k_0^z$ |
| $k_1^x$ | $k_1^y$ | $k_1^z$ |

## FIG. 2d

| x | y | z |
|---|---|---|
| $k_0^x$ | $k_0^y$ | $Enc_{k_0^x, k_0^y}(k_0^z)$ |
| $k_0^x$ | $k_1^y$ | $Enc_{k_0^x, k_1^y}(k_0^z)$ |
| $k_1^x$ | $k_0^y$ | $Enc_{k_1^x, k_0^y}(k_0^z)$ |
| $k_1^x$ | $k_1^y$ | $Enc_{k_1^x, k_1^y}(k_1^z)$ |

## FIG. 2e

| |
|---|
| $Enc_{k_1^x, k_1^y}(k_1^z)$ |
| $Enc_{k_0^x, k_0^y}(k_0^z)$ |
| $Enc_{k_1^x, k_0^y}(k_0^z)$ |
| $Enc_{k_0^x, k_1^y}(k_0^z)$ |

FIG. 3

## FIG. 4

$I_1$  $I_2$  $I_3$  $I_4$  $I_5$  $I_6$  $I_7$  $I_8$          $I_1$  $I_2$  $I_3$  $I_4$  $I_5$  $I_6$  $I_7$  $I_8$

$\bar{C}$          $C$

$S=\{2,4,5,6,7,8\}$

$\bar{S}=\{1,3\}$

——— $\in W$

＊— $\in \bar{W}$

EP 3 270 538 B1

FIG. 5

FIG. 6

**EP 3 270 538 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YAEL KALAI ; RALUCA ADA POPA ; VINOD VAIKUNTANATHAN ; NICKOLAI ZELDOVICH.** *Reusable Garbled Circuits and Succinct Functional Encryption de Shafi Goldwasser,* 13 Mai 2013
- **YING LUO ; SEN-CHING SAMSON CHEUNG ; TOMMASO PIGNATA ; RICCARDO LAZZERETTI ; MAURO BARNI.** *An efficient protocol for private iris-code matching by means of garbled circuits,* 30 Septembre 2012
- **YUVAL ISHAI ; EYAL KUSHILEVITZ ; BRENT WATERS.** *Encoding Functions with Constant Online Rate or How to Compress Garbled Circuits Keys Benny Applebaum,* 15 Février 2015
- **SERGEY GORBUNOV ; SHAI HALEVI ; VINOD VAIKUNTANATHAN ; DHINAKARAN VINAYAGA-MURTHY.** *How to Compress (Reusable) Garbled Circuits de Craig Gentry,* 10 Février 2013
- **JULIEN BRINGER ; OTHMANE EL OMRI ; CONSTANCE MOREL ; HERVÉ CHABANNE.** *Boosting GSHADE Capabilities,* 06 Juin 2016
- Efficient Secure Two-Party Protocols - Techniques and Constructions. **HAZAY, CARMIT ; LINDELL, YEHUDA.** Information Security and Cryptography. Springer, 2010
- **A. C.-C. YAO.** How to generate and exchange secrets (extended abstract). *In FOCS,* 1986
- **A.-R. SADEGHI ; T. SCHNEIDER ; I. WEHREN-BERG.** Efficient privacy-preserving face récognition. *In ICISC,* 2009
- **SNYDER, PETER.** *Yao's Garbled Circuits: Recent Directions and Implementations,* 2014
- **JOHN DAUGMAN.** *How iris recognition works*
- **KOLESNIKOV, VLADIMIR ; SADEGHI, AHMAD-REZA ; SCHNEIDER, THOMAS.** Improved Garbled Circuit Building Blocks and Applications to Auctions and Computing Minima. *In: Cryptology and Network Security, 8th International Conference, CANS,* 2009
- **GENTRY, CRAIG ; GORBUNOV, SERGEY ; HALEVI, SHAI ; VAIKUNTANATHAN, VINOD ; VINAYAGAMURTHY, DHINAKARAN.** How to Compress (Reusable) Garbled Circuits. *IACR Cryptology ePrint Archive,* 2013, vol. 2013, 687
- **GOLDWASSER, SHAFI ; KALAI, YAEL TAUMAN ; POPA, RALUCA A. ; VAIKUNTANATHAN, VINOD ; ZELDOVICH, NICKOLAI.** Reusable garbled circuits and succinct functional encryption. *In: Symposium on Theory of Computing Conference, STOC'13,* 2013, 555-564
- **RABIN, MICHAEL O.** How To Exchange Secrets with Oblivious Transfer. *Harvard University Technical Report 81,* 1981